# EUROPÄISCHE PATENTSCHRIFT

(11) **EP 2 235 085 B1**
(45) Veröffentlichungstag und Bekanntmachung des Hinweises auf die Patenterteilung: **26.09.2018**
(21) Anmeldenummer: 08871372.2
(22) Anmeldetag: 22.12.2008
(51) Int. Cl.: C08G 18/48, C08G 18/76, C08K 3/34, C08J 9/00, C08G 101/00, C08G 18/18

(54) **VERFAHREN ZUR HERSTELLUNG VON POLYURETHAN- ISOLIERSCHAUMSTOFFEN**
METHOD FOR PRODUCING POLYURETHANE INSULATING FOAMS
PROCÉDÉ DE FABRICATION DE MOUSSES ISOLANTES DE POLYURÉTHANE

(30) Priorität: 24.01.2008 DE 102008005946
(43) Veröffentlichungstag der Anmeldung: 06.10.2010
(73) Patentinhaber: Evonik Degussa GmbH, 45128 Essen (DE)
(72) Erfinder: SCHILLER, Carsten, 45470 Mülheim an der Ruhr (DE); NAUMANN, Matthias, Greensboro, NC 27407 (US); LANDERS, Rüdiger, 45257 Essen (DE); EILBRACHT, Christian, 44627 Herne (DE)
(86) Internationale Anmeldenummer: PCT/EP2008/068136
(87) Internationale Veröffentlichungsnummer: WO 2009/092505

(56) Entgegenhaltungen:
- EP-A- 0 388 952
- EP-A- 0 405 439
- EP-A- 0 513 573
- EP-A- 0 545 175
- WO-A-96/00750
- DE-A1- 1 804 362

## Beschreibung

Die Erfindung betrifft ein Verfahren zur Herstellung von Polyurethan- bzw. Polyisocyanuratschaumstoffen mit verbesserter Isolierwirkung unter Verwendung von porösen Partikeln als Nukleierungsmittel.

Die Herstellung von Polyurethan- bzw. Polyisocyanuratschaumstoffen durch Verschäumung schaumfähiger Reaktionsmischungen auf der Basis von Polyisocyanaten, Verbindungen mit reaktionsfähigen Wasserstoffatomen, Treibmitteln, Stabilisatoren und gegebenenfalls weiteren Zusatzstoffen wird heute im großtechnischen Maßstab betrieben. Dazu werden in der Regel alle Komponenten mit Ausnahme des Polyisocyanates zu einer verarbeitungsfähigen Mischung (A-Komponente) vorformuliert und diese in einer Verschäumungsanlage mit dem Polyisocyanat (B-Komponente) gemischt. In der zunächst flüssigen Reaktionsmischung erfolgen Schaumbildung und Polyadditionsreaktion gleichzeitig, bis die Masse nach kurzer Zeit zu einem harten, duroplastischen Schaumstoff ausgehärtet ist.

Da für Isolationsmaterialien ausschließlich duroplastische Polyurethane bzw. Polyisocyanurate eingesetzt werden, ist eine Verarbeitung mit Hilfe von Extrusionsverfahren, wie sie bei Thermoplasten Stand der Technik sind, nicht möglich.

Die unterschiedlichen technischen Anwendungsgebiete stellen dabei an die physikalischen und technischen Eigenschaften der jeweiligen Polyurethan- bzw. Polycyanurat-Schaumstoffe spezifische und sehr unterschiedliche und sich teilweise widersprechende Anforderungen: harte Schaumstoffe, weiche Schaumstoffe; niedriges Raumgewicht, hohes Raumgewicht; kleine Zellen, große Zellen etc.

Zur Herstellung von duroplastischen Isolierschaumstoffen ist es erforderlich, harte Schäume mit relativ niedrigem Raumgewicht von < 50 kg/m³ und - als wesentlichem Kriterium - möglichst vielen kleinen geschlossenen Zellen (hohe Zelldichte) zu erzeugen. Die Zellen sollen dabei im Wesentlichen gleichmäßig über das gesamte Formteil verteilt sein, d.h. keinen Gradienten aufweisen.

Damit sich ein Schaum bilden kann, ist ein Treibgas erforderlich. Dies kann CO₂, das sich aus der Reaktion von Isocyanat mit Wasser bildet oder zusätzlich hinzugefügt wird, und/oder eine hinzugefügte leichtsiedende organische Flüssigkeit, sein.

Das gebildete Gas muss dabei aus der flüssigen Phase austreten und Bläschen bilden, welche in der Steigphase des Schaums zu den späteren Schaumzellen anwachsen. Die Entstehung der anfangs mikroskopisch kleinen Bläschen in der flüssigen Phase wird als Nukleierung (= Keimbildung) bezeichnet und bedarf - analog zu anderen physikochemischen Nukleierungsvorgängen (z.B. bei Fällungsreaktionen) - einer Aktivierungsenergie. Es ist gesicherte Erkenntnis, dass die während der Verschäumungsreaktion erzielbare Übersättigung des flüssigen Reaktionsgemisches mit dem gebildeten/zugesetzten Treibgas nicht ausreicht, um genügend Selbstnukleierung, d. h. die selbständige Bildung von Gasbläschen, zu bewirken. Vielmehr muss die Mehrzahl der im fertigen Schaum vorliegenden Zellen bereits in der Nukleierungsphase als kleine (Luft)Gasbläschen vorliegen. Während der Verschäumungsreaktion wachsen dann die einzelnen im Reaktionsgemisch dispergierten Gasbläschen durch Eindiffusion des entwickelten Treibgases in diese als Keime dienenden Luftbläschen. Daraus folgt, dass für die Erzielung eines Isolierschaums vor Beginn der Schaumbildungsphase möglichst viele Keime in der flüssigen Reaktionsmischung erzeugt werden müssen. Dieser Prozess ist die Grundlage für die morphologischen Eigenschaften - Zellenzahl und Zellgrößenverteilung - des entstehenden Schaumes.

Zur Unterstützung der Blasenbildung bei der Nukleierung können mitverwendete Siliconschaumstabilisatoren wirken, indem sie die Oberflächenspannung absenken - und damit die zur Bildung der Blasenkeime notwendige Energie reduzieren - sowie die Dispersion von Luft in der reaktiven Mischung stabilisieren.

Stabilisatoren für Polyurethanschaumstoffe sind überwiegend wasserlösliche Polyethersiloxane. Es handelt sich um Umsetzungsprodukte aus Polydimethylsiloxanen mit Copolymeren aus Ethylenoxid und Propylenoxid. Sie sind für die Herstellung von Polyurethanschaumstoffen von erheblicher Bedeutung. Phänomenologisch besteht die Aufgabe des Schaumstabilisators nach heutiger Erkenntnis, neben der Unterstützung der Blasenbildung bei der Nukleierung, in der Emulgierung der Schaumrohstoffe sowie der Stabilisierung des expandierenden Schaumes unter anderem durch die Gewährleistung einer Oberflächenelastizität in den sich ausdehnenden Membranen des Schaums durch den Gibbs-Marangoni-Effekt: kurz, den thermodynamisch instabilen Zustand eines Schaums während des Steigvorgangs bis zu seiner Aushärtung durch Oberflächenkräfte aufrecht zu erhalten. Ihre Wirkungsweise bei der Schaumstoffbildung ist trotz zahlreicher Untersuchungen noch nicht abschließend geklärt.

Obwohl diese Verbindungen in gewissem Maße die Feinheit und Regelmäßigkeit der Zellstruktur beeinflussen, ist ihre Einsatzmenge auf Grund der oben dargelegten vielfältigen Interaktionen nicht frei wählbar, insbesondere wegen der dann eintretenden negativen Begleiterscheinungen, z.B. der Überstabilisierung, die in Extremfällen sogar zur Rissbildung und zu einem Schrumpf, d.h. zur völligen Unbrauchbarkeit des Schaumes, führen kann. Zudem unterliegt der positive Einfluss von Zellstabilisatoren auf die Nukleierung und damit auf die Feinzelligkeit des Schaumes einem Sättigungsverhalten bezüglich der Einsatzkonzentration des Stabilisators, d.h. es gibt eine Grenze in der Feinzelligkeit, über die hinaus eine Zellverfeinerung durch weitere Erhöhung der Stabilisatorkonzentration nicht möglich ist.

Je nach Herstellungsverfahren und je nachdem, welche weiteren Rohstoffe verwendet werden, erhält man jedoch in manchen Fällen eine nur unzureichende Zellfeinheit.

Als eine weitere technische Lösung wurde die heterogene Keimbildung an Feststoffen, insbesondere die Verwendung von Nanopartikeln oder nanostrukturierten Partikeln, vorgeschlagen (EP 1 683 831, EP 1 209 189, WO 2005/019328). Diese werden in der Regel in den Polyolkomponenten vorgemischt. Der durchschnittliche Primärpartikeldurchmesser dieser Pulver liegt vorzugsweise in mindestens einer Dimension in einem Bereich von 1 bis 200 nm, bevorzugt in einem Bereich von 10 bis 50 nm.

Solche Partikel können vorzugsweise in mindestens einer Dimension nanoskalige Partikel bzw. nanostrukturierte Partikel sein, die besonders bevorzugt ausgewählt sind aus der Gruppe der Metalle, Metalloxide, Mischoxide, Nitride, Hydroxide, Carbonate, Metallsalze, anderen anorganischen oder organischen Salzen, Silikate, Siliconharze, Silicone, Kohlenstoff (z.B. Aktivkohlen) und/oder organischen Polymere. Bevorzugte Beispiele sind Siliciumdioxid, Zinkoxid, Aluminiumoxid, Zirkoniumdioxid, Titandioxid, Silikate und Bornitride sowie andere anorganische Salze.

Es konnte festgestellt werden, dass die Zellstruktur beim Einsatz der nanoskaligen Partikel feiner wird (EP 1 683 831, EP 1 209 189, WO 2005/019328). In der Praxis beobachtet man jedoch bei verschiedenen Polyurethan- bzw. Polyisocyanurat-Hartschaumformulierungen ein sehr unterschiedliches Ansprechverhalten: während bei manchen Formulierungen mit geeigneten Nanopartikeln eine signifikante Zellverfeinerung feststellbar ist, bleibt der erwünsche Effekt bei anderen Formulierungen aus.

Der Vollständigkeit halber sei erwähnt, dass neben der Schaumbildung während der Polymerisationsreaktion, wie hier bei der Polyurethanbildung beschrieben, auch die Schaumbildung bei Extrusionsverfahren erfolgen kann. Diese Extrusionsverfahren sind jedoch grundsätzlich zu unterschieden von den hier beschriebenen Polyurethanisierungen unter duroplastischer Schaumbildung. Die WO 2002/034823 beschreibt so beispielsweise ein Extrusionsverfahren an Thermpplasten, dass zur Bildung von multi-modalen thermoplastischen Polymerschäumen führt.

Die erfindungsgemäß betrachteten Systeme der nichtthermoplastischen, sondern duroplastischen Polyurethan- bzw. Polycyanuratschäume hingegen zeichnen sich durch eine im Allgemeinen bevorzugte einheitliche, monomodale Zellgrößenverteilung aus.
Daher sind die im Rahmen dieser Anmeldung betrachteten duroplastischen Systeme auch nicht durch Extrusionsverfahren zu erhalten.

Ein weiterer bei vielen (Nano-)Partikeln zu beobachtender Nachteil ist, dass die (Polyol) Mischungen, die diese Partikel enthalten, sofort oder zumindest innerhalb sehr kurzer Zeiträume weiterverarbeitet werden müssen. Nach den für technische Prozesse in der Regel jedoch betriebsbedingt erforderlichen Lagerungszeiten ist der beobachtete Anfangseffekt minimiert oder oft nicht mehr vorhanden. Die Verwendung von Nanopartikeln als Nukleierungsmittel in Polyurethanschäumen (PU-Schäumen) zur Herstellung von Isoliermaterialien hat sich in der Praxis daher nicht durchsetzen können.

Es bestand daher weiterhin ein Bedarf an effektiven Nukleierungsmitteln, die in den praxisüblichen Formulierungen für PU-Isolierschäume bei geringen Einsatzmengen eine Erhöhung der Zellenzahl, d.h. eine Verschiebung der Zellgrößenverteilung in Richtung kleinerer Zelldurchmesser, was gleichbedeutend mit einer Verbesserung der Isolierwirkung ist, bewirken.

Die der Erfindung zugrunde liegende Aufgabe bestand darin, ein neues Verfahren zur Herstellung von harten Polyurethanschaumstoff-Formteilen mit verbesserter Isolierwirkung zur Verfügung zu stellen.

Überraschenderweise wurde nun gefunden, dass durch die Verwendung von porösen Feststoffen, insbesondere Silikaten mit Zeolith-Struktur, als Nukleierungsmittel eine Erhöhung der Zellenzahl und damit eine Verbesserung der Isolierwirkung zu bewirken ist. Dieser Effekt erfindungsgemäßer Partikel bleibt auch dann erhalten, wenn zwischen der Dispergierung der Partikel in den PU-Schaumrohstoffen bzw. -systemen und deren Verarbeitung zum Isolierschaumstoff praxisübliche Lagerzeiten auftreten.

Die Verwendung von Zeolithen in PU-Schäumen ist bereits bekannt.

Die Herstellung von harten Polyurethanschaumstoff-Formteilen ist beispielsweise in der DE-1 694 138 beschrieben. Es handelt sich bei diesen Formkörpern um solche mit einer dichten Außenhaut und einer über dem Querschnitt des Formteils hinweg differentiellen Dichteverteilung. Derartige Schaumstoffe werden allgemein als "Integralschaumstoffe" bezeichnet. Wesentlich für die Erzeugung dieser "Integralstruktur" ist die Verwendung niedrigsiedender Lösungsmittel als Treibmittel; ganz besonders geeignete sind hierfür die Chlor-Fluorkohlenwasserstoffe (CFKW) R 11 und R 113.

Die Herstellung von Polyurethanschaumstoffen mit kompakter Oberfläche und zellförmigem Kern ("Integralstruktur") unter Mitverwendung von Alkali-Aluminium-Silikaten mit Zeolithstruktur ist auch aus der DE- 1 804 362 bekannt. Bei den Schaumstoffen dieser Vorveröffentlichung handelt es sich jedoch um Schaumstoffe mit einer bei ca. 60 bis 120 kg/m³ liegenden Rohdichte, wobei das Hauptanliegen der Autoren darin bestand, trotz der Mitverwendung von Fluorchlorkohlenwasserstoffen nicht schrumpfende Schaumstoffe herzustellen.

EP 0 319 866 beschreibt ein Verfahren zur Herstellung von Polyurethanformteilen ("Integralstruktur") mit einer Rohdichte von mindestens 300 kg/m³, bei dem zeolithische Adsorbentien unter Verwendung von Wasser und/oder Kohlendioxid eingesetzt werden.

EP 1 544 229 beschreibt ein Verfahren zur Herstellung von Polyurethanintegralschaumstoffen welches dadurch gekennzeichnet ist, dass man eine
(A) Polyolformulierung aus mindestens einer Polyolkomponente mit einer
(B) Isocyanatkomponente aus organischen und/oder modifizierten organischen Polyisocyanaten und anorganischen Zeolithen umsetzt.

In der US 4,518,718 wird ein Verfahren zur Herstellung von Hybrid-Polyurethan-Polyimid Schaumstoffen beschrieben, bei dem Molekularsiebe vom Zeolith-Typ zur Entfernung von Wasser/Gasen aus der Reaktionsmischung verwendet werden.

Eine Vielzahl von Literaturstellen beschreibt weitere Anwendungszwecke wie das Entfernen von leicht flüchtigen Bestandteilen (US 2007/78193); die Reduzierung von Treibmitteln, enthaltend Halogenkohlenwasserstoffe (US 5,137,929); als Trägermaterial für Katalysatoren (EP 0 396 092) oder Treibmittel (JP 57-051728); die Adsorption von Kohlendioxid aus dem Schaum (EP 0 723 988, WO 90/11320, JP 01-102288, JP 01-121675, JP 02-206625, JP 03-292113, JP 03-137138, JP 08-073775, JP 08-198996, JP 56-041233, JP 57-049628, JP 64-067585, JP 64-079571).

Diese Literaturstellen können jedoch das erfindungsgemäße Verfahren nicht nahelegen, da die erfindungsgemäße Aufgabe (Verwendung von mikroporösen und/oder mesoporösen Feststoffen als Nukleierungsmittel) in den Vorveröffentlichungen weder offenbart noch nahegelegt wird. In keiner Literaturstelle wird der Einsatz von Zeolithen oder anderen mikro- und/oder mesoporösen Partikeln als Nukleierungsmittel zur Zellverfeinerung von Polyurethan- bzw. Polyisocyanurat-Isolationsschaumstoffen beschrieben, sondern der Fokus liegt auf den Adsorptionseigenschaften der Partikel. Diese Adsorptionseigenschaften werden genutzt, um beispielsweise die Schaumrohstoffe zu trocknen, Bestandteile des Zellgases (insbesondere Kohlendioxid) zu adsorbieren oder die Freisetzung von flüchtigen organischen Bestandteilen (VOCs) aus dem Schaumstoff zu reduzieren. Um eine ausreichende Adsorptionskapazität zu gewährleisten, werden hohe Einsatzmengen von zum Teil bis über 50 Gewichtsteilen auf 100 Gewichtsteile Polyol verwendet. Diese Einsatzmengen liegen weit oberhalb des Wirkungsoptimums für die jetzt beanspruchte Zellverfeinerung durch Nukleierung. Bei hohen Einsatzmengen überwiegen negative Auswirkungen auf Feinzelligkeit und Geschlossenzelligkeit, die üblicherweise bei hohen Einsatzkonzentrationen fester Füllstoffe in Isolationsschaum-Systemen beobachtet werden. Bei dem Einsatz von Zeolithen in Polyurethan-Schaumstoffen gemäß dem Stand der Technik tritt eine Zell-verfeinernde Wirkung demnach nicht auf.

In WO 96/000750 A1 wird ein Polyurethanschaum mit niedriger Wärmeleitfähigkeit beschrieben, der unter Zugabe von Silica-Aerogel als Verdicker zu einer Polyurethan-Reaktionsmischung gebildet wird. In EP 0405439 A2 wird ein Hartschaumstoff beschrieben, der als anorganischen Emulgator Kieselgel enthält, wobei der anorganische Emulgator auf das Blähmittel nukleierend wirkt. Der Einsatz mikro- und/oder mesoporöser Alumosilicate mit Zeolithstruktur wird in diesen Schriften nicht offenbart.

Gegenstand der vorliegenden Erfindung ist daher ein Verfahren zur Herstellung von Polyurethan- bzw. Polyisocyanurat-Isolierschaumstoffen gemäß Anspruch 1.

Ein weiterer Gegenstand der Erfindung sind Polyurethan- bzw. Polyisocyanurat-Isolierschaumstoffe gemäß Anspruch 10, hergestellt gemäß diesem Verfahren.

Weitere Gegenstände der Erfindung sind gekennzeichnet durch die Inhalte der Unteransprüche.

Die nach dem erfindungsgemäßen Verfahren hergestellten PU-Isolierschaumstoffe haben eine Dichte von 25 bis 45 kg/m³ und weisen gegenüber den herkömmlichen Isolierschaumstoffen eine Erhöhung der Zellenzahl, d.h. eine Verschiebung der Zellgrößenverteilung in Richtung kleinerer Zelldurchmesser und damit eine verbesserte Isolierwirkung, auf.

Überraschenderweise konnte so durch Beimischung der erfindungsgemäß verwendeten porösen Partikel signifikant erhöhte Anzahl an Zellen pro Zentimeter bei gleichzeitig wunschgemäß erniedrigter Wärmeleitfähigkeit sowohl im Initialstatus als auch im gealterten Zustand der Schäume erzielt werden. Besonders überraschend und bemerkenswert ist, dass die Beimischung der erfindungsgemäßen porösen Partikel dabei effektiver ist als die Beimischung von Nano-Partikeln, d.h. die Zell-verfeinernde Wirkung und die damit einhergehende Absenkung der Wärmeleitfähigkeit ist bei Zugabe von porösen Partikeln noch stärker ausgeprägt als bei Zugabe eine gleichen Menge an Nano-Partikeln.

Die Wirksamkeit der erfindungsgemäß verwendeten porösen Partikel ist dabei nur wenig von der Polyurethan- bzw. Polyisocyanurat-Basisrezeptur abhängig, d.h. die porösen Partikel lassen sich zur Verbesserung der Isoliereigenschaften einer großen Vielzahl an Polyurethan- bzw. Polyisocyanurat-Formulierungen einsetzen. Eine Verringerung der Wärmeleitfähigkeit durch Beimischung der porösen Partikel kann sowohl bei Formulierungen beobachtet werden, die bereits unter Ausschöpfung der dem Fachmann bekannten Methoden hinsichtlich Feinzelligkeit und niedriger Wärmeleitfähigkeit optimiert wurden - also dem Stand der Technik für die Anwendung als Isolierschaum entsprechen - als auch bei Formulierungen, die im Hinblick auf andere Schaumeigenschaften optimiert wurden und noch nicht die beste nach dem Stand der Technik erreichbare Feinzelligkeit und Wärmeleitfähigkeit zeigen.

Die erfindungsgemäß unter Laborbedingungen und über eine Demonstrationszusammensetzung zur Hervorhebung des erfinderischen Effekts definierten, nicht optimierten Schäume weisen eine Wärmeleitfähigkeit von kleiner gleich 22,4 mW/m*K auf, die sich durch Zusatz von dem Fachmann bekannter weiteren Hilfs- und Zuschlagstoffe noch deutlich absenken lässt.
Besonders bevorzugt ist eine Wärmeleitfähigkeit von weniger als 20 mW/m*K.
Auch die Anzahl der Zellen pro Zentimeter liegt im Bereich von größer als 40 Zellen/cm in anwendungsrelevantem Bereich, lässt sich aber ebenfalls durch den Zusatz weiterer bekannter Hilfs- und Zuschlagstoffe weiter optimieren. Besonders bevorzugt ist eine Zellzahl von mindestens 50 Zellen pro Zentimeter.

Die porösen Feststoffe im Sinne der vorliegenden Erfindung sind mikroporöse bis mesoporöse Partikel. Mikroporös bedeutet nach Definition der IUPAC, dass der mittlere Durchmesser der Poren < 2 nm beträgt. Mesoporös bedeutet nach Definition der IUPAC, dass der mittlere Durchmesser 2 bis 50 nm beträgt.

Die Partikelgröße der erfindungsgemäß verwendeten porösen Feststoffe ist relativ unkritisch und kann im Nanometerbereich bis zum Mikrometerbereich liegen. Die typische durchschnittliche Partikelgröße liegt unter 100 µm, vorzugsweise < 50 µm.

Erfindungsgemäß werden mikro- und/oder mesoporöse Alumosilicate ("MCM 41" als Beispiel eines mesoporösen Silicates) verwendet.

Erfindungsgemäß bevorzugt sind Festkörper mit Zeolith-Struktur, z.B. Alumosilikate der allgemeinen Formel

M_{2/n}O:Al₂O₃:xSiO₂:yH₂0

worin
M mindestens ein Metall der Wertigkeit n bedeutet und
x und y alle für Zeolithe üblichen Werte sein können.

Der Begriff "Zeolith" ist hier gemäß der Definition der IMA (International Mineralogical Association) von 1998 zu verstehen: "ein Zeolith ist eine kristalline Substanz mit einer Gerüststruktur von verknüpften Tetraedern aus vier Sauerstoffionen, die um ein Kation angeordnet sind. Das Gerüst enthält offene Poren in Form von Kanälen und Käfigen. Diese enthalten zumeist Wassermoleküle und weitere Kationen, die normalerweise austauschbar sind. Die Kanäle sind so groß, dass sie eine Diffusion von Gastmolekülen gestatten. Die wasserhaltigen Zeolithe können in der Regel bei Temperaturen unterhalb von 400 °C reversibel dehydratisiert werden. Das Gerüst kann durch Hydroxylgruppen oder Fluoridionen unterbrochen sein, die Plätze an den Ecken der Tetraeder besetzen, die nicht mit anderen Tetraedern verknüpft sind." (Coombs, D. S., Alberti, A., Armbruster, Th., Artioli, G., Colella, C., Galli, E., Grice, J. D., Liebau, F., Mandarino, J. A., Minato, H., Nickel, E. H., Passaglia, E., Peacor, D. R., Quartieri, S., Rinaldi, R., Ross, M., Sheppard, R. A., Tillmanns, E., Vezzalini, G.; Eur. J. Mineral., 10 (1998) 1037).

Besonders bevorzugt sind Zeolithe vom Faujasit-Typ FAU (Zeolith X und Zeolith Y), vom Strukturtyp LTA (Zeolith A), vom Strukturtyp MFI (ZSM-5), vom Mordenit-Typ MOR sowie Zeolithe vom Gismondin-Typ GIS (Zeolith P und Zeolith B).

Mikro- und mesoporöse Feststoffe besitzen eine sehr große (innere) Oberfläche und sind naturgemäß gute Adsorptionsmittel, d.h. die Poren lassen sich mit verschiedensten Substanzen füllen. Eine Vorbehandlung der porösen Partikel zur gezielten Beladung der Poren hat Auswirkungen auf die Zell-verfeinernde Wirkung der Partikel bei deren Einsatz zur Herstellung von Isolierschaumstoffen. Beispielsweise lässt sich die Zell-verfeinernde Wirkung gegenüber unbehandelten porösen Partikeln weiter steigern, wenn eine Beladung der Poren mit leichtflüchtigen Fluorkohlenwasserstoffen, bevorzugt HFC 245fa, HFC 134a, HFC 365 mfc und HCFC 141b, besonders bevorzugt perfluorierten Verbindungen wie Perfluorpentan und Perfluorhexan, vorgenommen wird. Gegenstand der Erfindung ist daher auch die Verwendung von entsprechend vorbehandelten mikro- und mesoporösen Partikeln zur Herstellung von Isolierschaumstoffen sowie die derart hergestellten Isolierschaumstoffe. Die porösen Feststoffe können der reaktiven Mischung direkt zugegeben oder in einer der Komponenten, vorzugsweise der Polyolkomponente, gegebenenfalls mit weiteren Hilfs- und Zusatzstoffen, vorgemischt werden.

Sie werden in Mengen von 0,1 bis 1,5 Gew.-Teile, vorzugsweise 0,2 bis 1,5 Gew.-Teile, insbesondere 0,5 bis 1,5 Gew.-Teile pro 100 Gew.-Teilen der Polyolkomponete verwendet.

Die erfindungsgemäß verwendeten Nukleierungsmittel sind prinzipiell in den üblichen schäumbaren Formulierungen für Isolierschaumstoffe aus Verbindungen mit reaktionsfähigen Wasserstoffatomen (A), der Polyisocyanatkomponente (B) und üblichen Hilfs- und Zusatzstoffen (C) verwendbar.

Als Polyolkomponenten (A) können die für die Formulierung von Isolierschaumstoffen üblichen Verbindungen verwendet werden, beispielsweise Polyetherpolyole und Polyesterpolyole. Polyetherpolyole werden durch Umsetzung von mehrwertigen Alkoholen oder Aminen mit Alkylenoxiden gewonnen. Polyesterpolyole basieren auf Estern mehrwertiger Carbonsäuren (meist Phthalsäure oder Terephthalsäure) mit mehrwertigen Alkoholen (meist Glycolen).

Als Polyisocyanatkomponenten (B) können die für die Formulierung von Isolierschaumstoffen üblichen Verbindungen verwendet werden, beispielsweise 4,4'-Diphenylmethandiisocyanat (MDI), Toluoldiisocyanat (TDI), Hexamethylendiisocyanat (HMDI) und Isophorondiisocyanat (IPDI). Besonders geeignet ist das als "polymeres MDI" ("crude MDI") bekannte Gemisch aus MDI und höher kondensierten analogen mit einer mittleren Funktionalität von 2 bis 4.

Ein geeignetes Verhältnis von Isocyanat und Polyol, ausgedrückt als Index der Formulierung, liegt im Bereich von 80 bis 500, bevorzugt 100 bis 350.
Als Hilfs- und Zusatzstoffe (C) können die für die Formulierung von Isolierschaumstoffen üblichen Verbindungen verwendet werden, darunter Katalysatoren, Zellstabilisatoren, Treibmittel, Flammschutzmittel, Füllstoffe, Farbstoffe und Lichtschutzmittel.

Geeignete Katalysatoren im Sinne dieser Erfindung sind Substanzen die die Gelreaktion (Isocyanat-Polyol), die Treibreaktion (Isocyanat-Wasser) oder die Di- bzw. Trimerisierung des Isocyanats katalysieren. Typische Beispiele sind die Amine Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether, Zinnverbindungen wie Dibutylzinndilaurat und Kaliumsalze wie Kaliumacetat und Kalium-2-ethylhexanoat. Geeignete Einsatzmengen richten sich nach dem Typ des Katalysators und liegen üblicherweise im Bereich von 0,05 bis 5 Gewichtsteilen, bzw. 0,1 bis 10 Gewichtsteilen für Kaliumsalze, bezogen auf 100 Gewichtsteile Polyol.

Geeignete Zellstabilisatoren sind oberflächenaktive Substanzen wie beispielsweise organische Tenside oder bevorzugt Silicon-Tenside (Polyether-Polydimethylsiloxan-Copolymere). Typische Einsatzmengen an Polyethersiloxan-Zellstabilisatoren liegen bei 0,5 bis 5 Gewichtsteile pro 100 Gewichtsteile Polyol, bevorzugt bei 1 bis 3 Gewichtsteile pro 100 Gewichtsteile Polyol.

Üblicherweise wird der schäumbaren Formulierung Wasser als chemisches Treibmittel zugesetzt, da es mit Isocyanaten unter Entwicklung von Kohlendioxid-Gas reagiert. Geeignete Wasser-Gehalte im Sinne dieser Erfindung hängen davon ab, ob zusätzlich zum Wasser noch physikalische Treibmittel eingesetzt werden oder nicht. Bei rein Wasser-getriebenen Schäumen liegen die Werte typischerweise bei 1 bis 20 Gewichtsteile pro 100 Gewichtsteile Polyol, werden zusätzlich andere Treibmittel eingesetzt, verringert sich die Einsatzmenge auf üblicherweise 0,1 bis 5 Gewichtsteile pro 100 Gewichtsteile Polyol.

Geeignete physikalische Treibmittel im Sinne dieser Erfindung sind Gase, beispielsweise verflüssigtes CO₂ und leichtflüchtige Flüssigkeiten, beispielsweise Kohlenwasserstoffe mit 4 bis 5 Kohlenstoff-Atomen, bevorzugt cyclo-, iso- und n-Pentan, Fluorkohlenwasserstoffe, bevorzugt HFC 245fa, HFC 134a und HFC 365mfc, Fluorchlorkohlenwasserstoffe, bevorzugt HCFC 141b, sauerstoffhaltige Verbindungen wie Methylformiat und Dimethoxymethan, oder Chlorkohlenwasserstoffe, bevorzugt 1,2-Dichlorethan. Neben Wasser und ggf. physikalischen Treibmitteln können auch andere chemische Triebmittel eingesetzt werden, die mit Isocyanaten unter Gasentwicklung reagieren, wie beispielsweise Ameisensäure.

Isolationsschaumstoffe für die Wärmedämmung von Gebäuden unterliegen Brandschutzanforderungen und müssen flammhemmend ausgerüstet werden. Geeignete Flammschutzmittel zu diesem Zweck sind bevorzugt flüssige organische PhosphorVerbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP) oder Feststoffe wie Ammoniumpolyphosphat (APP) und roter Phosphor. Desweiteren sind als Flammschutzmittel halogenierte Verbindungen, beispielsweise halogenierte Polyole, sowie Feststoffe wie Blähgraphit und Melamin geeignet.

Weitere Gegenstände der Erfindung ergeben sich aus den Ansprüchen, deren Offenbarungsgehalt vollumfänglich Teil dieser Beschreibung ist.

Die nachfolgenden Beispiele sollen zur Verdeutlichung der Erfindung dienen, sie stellen jedoch keinerlei Einschränkung dar.

Die erfindungsgemäßen Verfahren zur Herstellung von Polyurethan- und Polyisocyanurat-Isolierschaumstoffen und der Verwendung porösen Feststoffe dabei, werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Ver¬bindungen, die durch Herausnahme von einzelnen Werten (Bereichen) oder Verbindungen erhalten werden können.

### Ausführungsbeispiele:

Eine typische Polyurethan- bzw. Polyisocyanurat-Isolierschaumformulierung im Sinne dieser Erfindung ergibt ein Raumgewicht von 25 bis 45 kg/m³ und weist die folgende Zusammensetzung auf:

**Tabelle 1:**

| Komponente | Gewichtsanteil |
|---|---|
| Polyol | 100 |
| Amin-Katalysator | 0,05-5 |
| Kalium-Trimerisierungskatalysator | 0-10 |
| Polyethersiloxan | 0,5-5 |
| Wasser | 0,1-20 |
| Treibmittel | 0-40 |
| Flammschutzmittel | 0-50 |
| | |
| Isocyanat-Index: 80-500 | |

Die Verarbeitung der erfindungsgemäßen Formulierungen zu Hartschaumstoffen kann nach allen dem Fachmann geläufigen Verfahren erfolgen, beispielsweise im Handmischverfahren oder bevorzugt mit Hilfe von Hochdruck-Verschäumungsmaschinen.

Die Erfindung soll anhand der nachfolgenden Beispiele näher erläutert werden.
Es sei darauf hingewiesen, dass die experimentellen Daten auf Polyurethan-Laborsystemen beruhen, die nicht anwendungstechnisch optimiert wurden um Sekundäreinflüsse bedingt durch den Zusatz weiterer Additive und Zuschlagstoffe ausschließen zu können.

Für den anwendungstechnischen Vergleich wurde folgende Schaumformulierung verwendet (Tabelle 2):

| Komponente | Einsatzmenge |
|---|---|
| Polyetherpolyol* | 95 g (100 Teile) |
| DMCHA** | 1.4 g (1,5 Teile) |
| Wasser | 2,5 g (2,6 Teile) |
| cyclo-Pentan | 12,4 g (13,1 Teile) |
| Stabilisator*** | 1,4 g (1,5 Teile) |
| Nukleierungsmittel | 0,95 g (1,0 Teile) |
| | |
| MDI**** | 188,6 g (198,5 Teile) |

| | |
|---|---|
| * Daltolac R 471 der Firma Huntsman, OH-Zahl 470 mgKOH/g, Funktionalität 4,1 ** DMCHA: Dimethylcyclohexylamin dient als aminischer Katalysator *** TEGOSTAB B 8462 der Firma Evonik Goldschmidt, ein Polyethersiloxan **** polymeres MDI, 200 mPa*s, 31,5% NCO, Funktionalität 2,7 | |

Als Nukleierungsmittel wurden eingesetzt (Tabelle 3):

| Substanz | Lieferant / Kommentar |
|---|---|
| erfindungsgemäß | |
| Molekularsieb 4A | Fluka, |
| | Zeolith A, mikroporös, Na₁₂[(AlO₂)₁₂(SiO₂)₁₂]·x H₂O |
| Molekularsieb 5A | Fluka, Zeolith A, mikroporös, CaₙNa₁₂₋₂ₙ[(AlO₂)₁₂(SiO₂)₁₂]·x H₂O |
| Molekularsieb 13X | Fluka, |
| | Zeolith X, mikroporös, Na₈₆[(AlO₂)₈₆(SiO₂)₁₀₆]·x H₂O |
| Molekularsieb 13X + PFA | Zeolith X wie vor, jedoch vorbehandelt durch Dispergierung in Perfluorpentan und anschließendem Trocknen an der Luft |
| Zeoflair 100 | Zeochem, |
| | Zeolith ZSM-5, mikroporös |
| Silica Gel Grade 62* | Sigma-Aldrich, |
| | Kieselgel zur Chromatographie, mesoporös |
| nicht erfindungsgemäßes Vergleichsbeispiel | |
| Quarzsand-Pulver | Partikelgröße < 50 µm, nicht porös |
| SiO₂-Nano-Partikel: Aerosil® R 8200 | Evonik Industries, |
| | pyrogene Kieselsäure, oberflächenmodifiziert, |
| | nicht porös |

| | |
|---|---|
| * nicht erfindungsgemäß | |

Die Durchführung der Vergleichsverschäumungen erfolgte im Handmischverfahren. Dazu wurden Polyol, Katalysatoren, Wasser, Schaumstabilisator, Nukleierungsmittel und Treibmittel in einen Becher eingewogen und mit einem Tellerrührer (6 cm Durchmesser) 30 s bei 1.000 Upm vermischt. Durch erneutes Abwiegen wurde die beim Mischvorgang verdunstete Treibmittelmenge bestimmt und wieder ergänzt. Jetzt wurde das MDI zugegeben, die Reaktionsmischung mit dem beschriebenen Rührer 7 s bei 2.500 Upm verrührt und sofort in eine auf 45 °C thermostatisierte Aluminiumform von 145 cm x 14 cm x 3,5 cm Größe überführt, welche im Winkel von 10° (entlang der 145 cm messenden Seite) geneigt und mit Polyethylenfolie ausgekleidet war. Die Schaumformulierung wurde dabei an der tiefer liegenden Seite eingetragen, so dass der expandierende Schaum die Form im Eingussbereich ausfüllt und in Richtung der höher liegenden Seite aufsteigt. Die Einsatzmenge an Schaumformulierung war dabei so bemessen, dass sie um 10 % über der zur Mindestbefüllung der Form notwendigen Menge lag.

Nach 10 min wurden die Schaumstoffe entformt. Einen Tag nach der Verschäumung wurden die Schaumstoffe analysiert. Oberfläche und Innenstörungen wurden subjektiv anhand einer Skala von 1 bis 10 beurteilt, wobei 10 einem (idealisierten) ungestörten Schaum und 1 einen extrem stark gestörten Schaum repräsentiert. Die Porenstruktur (mittlere Zahl der Zellen pro 1 cm) wurde auf einer Schnittfläche optisch durch Vergleich mit Vergleichsschäumen beurteilt. Die Wärmeleitzahl wurde an 2,5 cm dicken Scheiben mit einem Gerät vom Typ Hesto Control bei Temperaturen an Probenunter- und -oberseite von 10 °C und 36 °C gemessen. Zur Bestimmung eines Alterungswertes der Wärmeleitfähigkeit wurden die Probekörper über 7 Tage bei 70 °C gelagert und danach erneut vermessen.

Die Ergebnisse sind in der folgenden Tabelle 4 zusammengestellt:

| Nukleierungsmittel | Wärmeleitfähigkeit mW/m*K | | Zellen / cm | Defekte (oben/unten/innen) |
|---|---|---|---|---|
| | initial | gealtert | | |
| erfindungsgemäß | | | | |
| Zeolith 4A | 22,4 | 24,2 | 40-44 | 4 / 5 / 8 |
| Zeolith 5A | 22,2 | 23,9 | 40-44 | 4 / 5 / 8 |
| Zeolith 13X | 22,2 | 24,2 | 40-44 | 4 / 4 / 8 |
| 13X + PFA | 21,9 | 23,9 | 40-44 | 4 / 5 / 8 |
| Zeoflair 100 | 22,1 | 24,1 | 40-44 | 4 / 4 / 8 |
| Silicagel 62** | 22,4 | 24,3 | 40-44 | 4 / 4 / 7 |

| nicht erfindungsgemäße Vergleichsbeispiele | | | | |
|---|---|---|---|---|
| ohne | 22,7 | 24,6 | 35-39 | 4 / 5 / 8 |
| Quarz-Pulver | 22,8 | 24,9 | 35-39 | 4 / 4 / 7 |
| Aerosil R8200 | 22,5 | 24,5 | 35-39 | 4 / 4 / 8 |

| | | | | |
|---|---|---|---|---|
| ** nicht erfindungsgemäßes Beispiel | | | | |

Die Ergebnisse zeigen, dass mit den erfindungsgemäßen porösen Partikeln eine signifikante Verbesserung der Wärmeleitfähigkeit erzielt werden kann - die Werte liegen sowohl im frischen als auch im gealterten Zustand 0,3 bis 0,7 mW/m*K unter dem Referenzwert des Schaums ohne Zusatz von Nukleierungsmitteln.

Vergleicht man die Zellfeinheit der Schäume, so findet man bei den Schäumen mit Zusatz der erfindungsgemäßen Partikel eine höhere Anzahl an Zellen pro Zentimeter, d.h. eine feinere Zellstruktur als bei dem Vergleichsschaum ohne Nukleierungsmittel. Die feinere Zellstruktur zeigt, dass die porösen Partikel die Nukleierung der Schaumzellen fördern und ist als Ursache für die Verringerung der Wärmeleitfähigkeit anzusehen.

Alle anderen für den Gebrauch relevanten Schaumeigenschaften werden durch die erfindungsgemäßen Partikel nicht oder nur unwesentlich beeinflusst. Auch bei der recht sensibel reagierenden Oberflächenqualität der Schaum-Probekörper findet man keine oder nur eine marginale Verschlechterung.

Das als nicht erfindungsgemäßes Vergleichsbeispiel ebenfalls untersuchte Quarzsand-Pulver zeigt nicht die positive Wirkung der erfindungsgemäßen Partikel, d.h. die Zellstruktur wird durch Quarz-Pulver nicht feiner und die Wärmeleitfähigkeit nicht niedriger.

Auch bei Einsatz von Nano-Partikeln in Form von pyrogener Kieselsäure wird nur eine minimale Verringerung der Wärmeleitfähigkeit beobachtet (0,1 bis 0,2 mW/m*K), ein wesentlich kleinerer Effekt als bei den erfindungsgemäßen porösen Partikeln.

Chemisch betrachtet sind sowohl Quarz als auch pyrogene Kieselsäure Siliciumdioxid und weisen damit eine chemische Verwandtschaft mit den genannten porösen Partikeln auf, welche zur Familie der Silikate gehören. Ein wesentlicher Unterschied besteht jedoch darin, dass das Quarzpulver und pyrogene Kieselsäure im Gegensatz zu den erfindungsgemäßen Partikeln weder mikro- noch mesoporös sind. Dies legt die Vermutung nahe, dass die positive Wirkung der erfindungsgemäßen Partikel durch ihre mikro- bzw. mesoporöse Struktur hervorgerufen wird.

## Patentansprüche

1. Verfahren zur Herstellung von Polyurethan- bzw. Polyisocyanurat-Isolierschaumstoffen mit einer Dichte von 25 bis 45 kg/m³ auf der Basis schaumfähiger Reaktionsmischungen enthaltend Polyisocyanate, Verbindungen mit reaktionsfähigen Wasserstoffatomen, Treibmitteln, Stabilisatoren, Nukleierungsmitteln und gegebenenfalls weiteren Zusatzstoffen, **dadurch gekennzeichnet, dass** als Nukleierungsmittel mikro- und/oder mesoporöse Alumosilicate als poröse Feststoffe mit Zeolithstruktur verwendet werden, in Mengen von 0,1 bis 1,5 Gew.-Teilen, pro 100 Gew.-Teilen der Polyolkomponente.

2. Verfahren zur Herstellung von Polyurethan- bzw. Polyisocyanurat-Isolierschaumstoffen gemäß Anspruch 1, **dadurch gekennzeichnet, dass** als Nukleierungsmittel Zeolithe vom Faujasit-Typ FAU verwendet werden.

3. Verfahren zur Herstellung von Polyurethan- bzw. Polyisocyanurat-Isolierschaumstoffen gemäß Anspruch 1, **dadurch gekennzeichnet, dass** als Nukleierungsmittel Zeolithe vom Strukturtyp LTA verwendet werden.

4. Verfahren zur Herstellung von Polyurethan- bzw. Polyisocyanurat-Isolierschaumstoffen gemäß Anspruch 1, **dadurch gekennzeichnet, dass** als Nukleierungsmittel Zeolithe vom Strukturtyp MFI verwendet werden.

5. Verfahren zur Herstellung von Polyurethan- bzw. Polyisocyanurat-Isolierschaumstoffen gemäß Anspruch 1, **dadurch gekennzeichnet, dass** als Nukleierungsmittel Zeolithe vom Mordenit-Typ MOR verwendet werden.

6. Verfahren zur Herstellung von Polyurethan- bzw. Polyisocyanurat-Isolierschaumstoffen gemäß Anspruch 1, **dadurch gekennzeichnet, dass** als Nukleierungsmittel Zeolithe vom Gismondin-Typ GIS verwendet werden.

7. Verfahren zur Herstellung von Polyurethan- bzw. Polyisocyanurat-Isolierschaumstoffen gemäß Anspruch 1, **dadurch gekennzeichnet, dass** die als Nukleierungsmittel verwendeten Alumosilicate mit Zeolithstruktur zur gezielten Füllung der Poren vorbehandelt werden.

8. Verfahren zur Herstellung von Polyurethan- bzw. Polyisocyanurat-Isolierschaumstoffen gemäß Anspruch 7, **dadurch gekennzeichnet, dass** die Poren der porösen Feststoffe mit Fluor-haltigen organischen Verbindungen gefüllt werden.

9. Verfahren zur Herstellung von Polyurethan- bzw. Polyisocyanurat-Isolierschaumstoffen gemäß Anspruch 8, **dadurch gekennzeichnet, dass** die Poren der Alumosilicate mit Zeolithstruktur mit Fluorkohlenwasserstoffen und/oder Perfluoroalkanen gefüllt werden.

10. Polyurethan- bzw. Polyisocyanurat-Isolierschaumstoffe mit einer Dichte von 25 bis 45 kg/m³, hergestellt gemäß zumindest einem der Verfahren gemäß den Ansprüche 1 bis 9.

11. Polyurethan- bzw. Polyisocyanurat-Isolierschaumstoffe gemäß Anspruch 10, **dadurch gekennzeichnet, dass** sie eine Wärmeleitfähigkeit von kleiner gleich 22,4 mW/m*K aufweisen, gemessen wie in der Beschreibung angegeben.

12. Polyurethan- bzw. Polyisocyanurat-Isolierschaumstoffe gemäß Anspruch 10 oder 11, **dadurch gekennzeichnet, dass** die Anzahl der Zellen pro Zentimeter im Bereich von größer als 40 Zellen/cm liegt.

13. Verfahren zur Herstellung von Polyurethan- bzw. Polyisocyanurat-Isolierschaumstoffen gemäß zumindest einem der Ansprüche 1 bis 9, **dadurch gekennzeichnet, dass** als Isocyanatkomponente Methylendiphenyldiisocyanat MDI verwendet wird.

## Claims

1. Process for producing polyurethane and polyisocyanurate insulation foams having a density of from 25 to 45 kg/m³ based on foamable reaction mixtures containing polyisocyanates, compounds having reactive hydrogen atoms, blowing agents, stabilizers, nucleating agents and, if appropriate, further additives, **characterized in that** microporous and/or mesoporous aluminosilicates are used as nucleating agents as porous solids having a zeolite structure, in amounts of from 0.1 to 1.5 parts by weight, per 100 parts by weight of the polyol component.

2. Process for producing polyurethane and polyisocyanurate insulation foams according to Claim 1, **characterized in that** zeolites of the faujasite type FAU are used as nucleating agents.

3. Process for producing polyurethane and polyisocyanurate insulation foams according to Claim 1, **characterized in that** zeolites of the structure type LTA are used as nucleating agents.

4. Process for producing polyurethane and polyisocyanurate insulation foams according to Claim 1, **characterized in that** zeolites of the structure type MFI are used as nucleating agents.

5. Process for producing polyurethane and polyisocyanurate insulation foams according to Claim 1, **characterized in that** zeolites of the mordenite type MOR are used as nucleating agents.

6. Process for producing polyurethane and polyisocyanurate insulation foams according to Claim 1, **characterized in that** zeolites of the Gismondine type GIS are used as nucleating agents.

7. Process for producing polyurethane and polyisocyanurate insulation foams according to Claim 1, **characterized in that** the aluminosilicates having a zeolite structure used as nucleating agents are pretreated for filling the pores in a targeted manner.

8. Process for producing polyurethane and polyisocyanurate insulation foams according to Claim 7, **characterized in that** the pores of the porous solids are filled with fluorine-containing organic compounds.

9. Process for producing polyurethane and polyisocyanurate insulation foams according to Claim 8, **characterized in that** the pores of the aluminosilicates having a zeolite structure are filled with fluorinated hydrocarbons and/or perfluoroalkanes.

10. Polyurethane and polyisocyanurate insulation foams having a density of from 25 to 45 kg/m³ produced by at least one of the processes according to Claims 1 to 9.

11. Polyurethane and polyisocyanurate insulation foams according to Claim 10, **characterized in that** they have a thermal conductivity of less than or equal to 22.4 mW/m*K, measured as stated in the description.

12. Polyurethane and polyisocyanurate insulation foams according to Claim 10 or 11, **characterized in that** the number of cells per centimetre is in the range of greater than 40 cells/cm.

13. Process for producing polyurethane and polyisocyanurate insulation foams according to at least one of Claims 1 to 9, **characterized in that** methylene diphenyldiisocyanate MDI is used as isocyanate component.

## Revendications

1. Procédé pour la préparation de mousses isolantes à base de polyuréthane ou de polyisocyanurate présentant une densité de 25 à 45 kg/m³ à base de mélanges réactionnels pouvant mousser, contenant des polyisocyanates, des composés présentant des atomes d'hydrogène aptes à réagir, des agents gonflants, des stabilisants, des agents de nucléation et le cas échéant d'autres additifs, **caractérisé en ce qu'**on utilise, comme agents de nucléation, des aluminosilicates microporeux et/ou mésoporeux comme solides poreux présentant une structure zéolithique, en des quantités de 0,1 à 1,5 partie en poids, par 100 parties en poids du composant polyol.

2. Procédé pour la préparation de mousses isolantes à base de polyuréthane ou de polyisocyanurate selon la revendication 1, **caractérisé en ce qu'**on utilise, comme agents de nucléation, des zéolithes du type faujasite FAU.

3. Procédé pour la préparation de mousses isolantes à base de polyuréthane ou de polyisocyanurate selon la revendication 1, **caractérisé en ce qu'**on utilise, comme agents de nucléation, des zéolithes du type de structure LTA.

4. Procédé pour la préparation de mousses isolantes à base de polyuréthane ou de polyisocyanurate selon la revendication 1, **caractérisé en ce qu'**on utilise, comme agents de nucléation, des zéolithes du type de structure MFI.

5. Procédé pour la préparation de mousses isolantes à base de polyuréthane ou de polyisocyanurate selon la revendication 1, **caractérisé en ce qu'**on utilise, comme agents de nucléation, des zéolithes du type mordénite MOR.

6. Procédé pour la préparation de mousses isolantes à base de polyuréthane ou de polyisocyanurate selon la revendication 1, **caractérisé en ce qu'**on utilise, comme agents de nucléation, des zéolithes du type gismondin GIS.

7. Procédé pour la préparation de mousses isolantes à base de polyuréthane ou de polyisocyanurate selon la revendication 1, **caractérisé en ce que** les aluminosilicates présentant une structure zéolithique, utilisés comme agents de nucléation, sont prétraités pour le remplissage ciblé des pores.

8. Procédé pour la préparation de mousses isolantes à base de polyuréthane ou de polyisocyanurate selon la revendication 7, **caractérisé en ce que** les pores des solides poreux sont remplis par des composés organiques contenant du fluor.

9. Procédé pour la préparation de mousses isolantes à base de polyuréthane ou de polyisocyanurate selon la revendication 8, **caractérisé en ce que** les pores des aluminosilicates présentant une structure zéolithique sont remplis par des hydrocarbures fluorés et/ou des perfluoroalcanes.

10. Mousses isolantes à base de polyuréthane ou de polyisocyanurate présentant une densité de 25 à 45 kg/m³, préparées selon au moins l'un des procédés selon les revendications 1 à 9.

11. Mousses isolantes à base de polyuréthane ou de polyisocyanurate selon la revendication 10, **caractérisées en ce qu'**elles présentent une conductibilité thermique inférieure à 22,4 mW/m*K, mesurée comme indiqué dans la description.

12. Mousses isolantes à base de polyuréthane ou de polyisocyanurate selon la revendication 10 ou 11, **caractérisées en ce que** le nombre de cellules par centimètre se situe dans la plage supérieure à 40 cellules/cm.

13. Procédé pour la préparation de mousses isolantes à base de polyuréthane ou de polyisocyanurate selon au moins l'une quelconque des revendications 1 à 9, **caractérisé en ce qu'**on utilise, comme composant isocyanate, du diisocyanate de méthylènediphényle MDI.
